(19) Europäisches Patentamt
European Patent Office
Office européen des brevets

(11) **EP 0 451 497 B2**

(12) **NOUVEAU FASCICULE DE BREVET EUROPEEN**

(45) Date de publication et mention de la décision concernant l'opposition:
**20.12.2000 Bulletin 2000/51**

(51) Int. Cl.[7]: **H01Q 3/26**

(45) Mention de la délivrance du brevet:
**20.12.1995 Bulletin 1995/51**

(21) Numéro de dépôt: **91103216.7**

(22) Date de dépôt: **04.03.1991**

(54) **Procédé de formation du diagramme d'une antenne active pour radar à balayage électronique et antenne mettant en oeuvre ce procédé**

Verfahren zur Formung des Strahlendiagrammes einer aktiven Radarantenne mit elektronisch gesteuerter Ablenkung, und Antenne dazu

Method for forming the radiation pattern of an active antenna for radar with electronic scanning, and antenna using this method

(84) Etats contractants désignés:
**DE ES FR GB IT SE**

(30) Priorité: **09.03.1990 FR 9003028**

(43) Date de publication de la demande:
**16.10.1991 Bulletin 1991/42**

(73) Titulaire:
**ALCATEL SPACE INDUSTRIES**
**92000 Nanterre (FR)**

(72) Inventeurs:
• **Caille, Gérard**
  **F-31170 Tournefeuille (FR)**
• **Mangenot, Cyril**
  **F-31400 Toulouse (FR)**

(74) Mandataire: **Smith, Bradford Lee**
**COMPAGNIE FINANCIERE ALCATEL**
**Dépt. Propr. Industrielle,**
**30, avenue Kléber**
**75116 Paris (FR)**

(56) Documents cités:
**EP-A- 0 246 640**       **EP-A- 0 275 303**
**DE-A- 2 943 359**

• **Modern Radar System Analysis, David K.Barton, Artech House, Inc. 1988**
• **Radar Handbook, Merill I Skolnik, 1970**
• **Proceedings of the IEEE,vol.56,no 11,1968,Design of Electronic Scanning Radar Systems,Peter J.Kahrilas**
• **Proceedings of the IEEE,vol.70,no 3,1982,Phased Array Theory and Technology, Robert J.Mailloux**
• **IEEE Transactions on antennas and propagation, Vol. AP-29,no 1,1981, Microstrip Array Technology, Robert J. Mailloux et al**
• **L'Onde Electrique, Mars-Avril 1989, Vol.69, No. 2,pages 7-14, Avenir des antennes-réseaux actives,Jean-Louis Pourailly et Claude Guerin**
• **M.Cohn,B.Sichelstiel: " Antenna and Monolithic MIC T/R Module Architecture for an Advanced Airborne Fire Control Radar System"; dans: Proceedings of the EASCON-Conf. 1981 (IEEE-Publication), pages 179 à 183**
• **Harwell: " Airborne Solid State Radar Technology ", dans : Eli Brookner : " Radar Technology " ( Artech House, Inc., 1988, Norwood, Mass.), chap.20,pages 276 à 287**
• **Present and Future Trends in Radar Systems and components : dans: Eli Brookner: " Radar Technology " ( Artech House Inc., 1988, Norwood, Mass.), pages 325 à 287**
• **M.E.Davis,J.K.Smith,C.E.Grove: " L-Band T/R Module for Airborne Phased Array "; Microwave Journal, Fevrier 1977,pages 54 à 60.**

- K.Solbach:" Radar auf dem Weg zum Active Array";dans:7.Radarsymposium,10 à 12 Octobre 1989, ULM;éditeur:Deutsche Gesellschaft für Ortung und Navigation e.V (Verlag TüV Rheinland GmbH,Köln,1989),pages 347 à 351
- H.Moschüring: "Sende/Empfangsmodul für künftige aktive phasenwinkel- und amplitudengesteuerte RADAR Antennensysteme ";dans: 7.Radarsymposium, 10 à 12 Octobre 1989, Ulm;éditeur:Deutsche Gesellschaft für Ortung und Navigation e.V.,(Verlag TüV Rheinland GmbH,Köln,1989),pages 365 à 375.
- Dodson: " L Band Solid State Array Radar Overview ";dans:Eli Brookner: " Radar Technology" ( Artech House,Inc., 1988,Norwood,Mass.),chap.19,pages 265 à 273
- E.H.Gregory: " Applicability,Availability and Affordability of GaAs MMICs in Military Systems ";Microwave Journal, Mars 1987,pages 119 à 126
- D.N. McQuiddy,Jr.: " Solid State Radar's path to GaAs"; dans:1982 IEEE MTT-S Digest, 15 à 17 Juin 1982,Dallas, Texas, p.176 à 178
- W.R.Wisseman, L.C.Witkowski, G.E.Brehm,R.P.Coats,D.D. Heston, R.D. Hudgens,R.E.Lehmann,H.M.Macksey and H.Q. Tserng: " X-Band GaAs Single-Chip T/R Radar Module"; Microwave Journal, Septembre 1987, pages 167 à 173
- U.Petri: " Kompensation von Amplitudenbelegungsfehlern bei Gruppenantennen durch Phasen-Einstellung ";Wiss.Ber.AEG-TELEFUNKEN 54(1981) 1-2,p.58 à 63
- J.J.Lee: " Sidelobes Control of Solid-State Array Antennas "; IEEE Transactions on Antennas and Propagation, Vol.36,No.3,Mars 1988,pages 339 à 344
- R.J.Naster,M.R.Lang: " Affordable MMIC Designs for Phased Arrays "; Microwave Journal,Mars 1987,pages 141 à 150
- Eli Brookner: " Array Radars: An Update, PartI and II"; Microwave Journal,Fevrier 1987,pages 117 à 138, und Microwave Journal,Mars 1987,pages 167 à 174
- N.Amitay,C.P.Wu,V.Galindo:" Methods of Phased Array Analysis";dans:A.A.Oliner,G.H.Knittel: " Phased Array Antennas "; (Artech House Inc., 1972,Dedham,Mass.),pages 68,69
- T.C.Cheston,J.Frank: Array Antennas";dans:M.I.Skolnik: " Radar Handbook ",( McGraw-Hill; 1970,New York ), chapitre 11,pages 11-24 et 11-25

**Description**

L'invention concerne un procédé de formation du diagramme d'une antenne active à haut rendement pour radar à balayage électronique et une antenne mettant en oeuvre ce procédé.

Le balayage électronique permet d'accroître de façon très importante les performances des radars, par sa souplesse (nombreux modes de fonctionnement possible) et la rapidité (déplacement quasi instantané du faisceau).

Cependant son principal inconvénient est le nombre très élevé de contrôles de phase, et souvent d'amplitude, nécessaires, d'où des pertes, un coût, une masse et une consommation souvent prohibitifs.

Les inconvénients relatifs aux pertes, coût, masse et encombrement ont été surmontés par l'industrialisation en série des circuits intégrés hyperfréquences sur arséniure de gallium (MMIC) : Il est ainsi possible de réaliser de façon très compacte des Modules Actifs Emission-Réception (MAER) qui intègrent les fonctions déphasage, commutation, émission-réception et amplification.

Mais les amplificateurs de puissance-émission en technologie MMIC ont un rendement assez mauvais, qui, de plus, se détériore si l'on fait varier le niveau de la puissance de sortie.

Dans les réalisations habituelles, cette variation de niveau est obligatoire :

- aussi bien spatialement pour former un diagramme d'antenne à bas niveau de lobes secondaires ;
- que temporellement, pour moduler la largeur du lobe en l'adaptant à la mission.

Il en résulte une consommation prohibitive de ce type d'antenne "active" radar.

Il existe plusieurs documents de l'art connu et notamment

- les articles intitulés "Array Radars : An Update" Part 1 and Part II" de Eli Brookner paru dans "Microwave Journal" (Février + Mars 1987) ;
- l'article intitulé "Applicability, Availability and Affordability of GaAs MMICs In military Systems" de Eugène H. Gregory, paru dans "Microwave Journal" (mars 1987) ;
- l'article intitulé "Affordable MMIC Designs for Phased Arrays" de Ronald J. Naster, Anthony W. Jacomb-Hood et Mark R. Lang, paru dans "Microwave journal" (mars 1987).

Les premiers radars à balayage électronique de l'art connu utilisent des déphaseurs à ferrite ou à diodes pour commander le dépointage du faisceau :

- les déphaseurs à diodes présentent l'inconvénient majeur de pertes importantes (plusieurs dB pour les déphaseurs à 4 ou 5 bits) ce qui oblige à augmenter de beaucoup la puissance des amplificateurs, déjà critiques ;
- les déphaseurs à ferrite présentent des pertes inférieures au dB, mais une masse et un encombrement important. Ces deux paramètres deviennent critiques pour les radars aéroportés, et empêchent leur embarquement sur des satellites.

Le document EP-0 246 640 décrit un module MAER réalisé en technologie hybride, utilisant des déphaseurs à pions réglables pour en faire des pièges à quart d'onde. Ce réglage sera effectué en général au dernier stade de la réalisation du module MAER. Il est donc relativement difficile d'intervenir plus tard, au moment de l'intégration au sein d'un système d'antenne, afin de régler une loi de phase à appliquer sur un réseau d'éléments. De plus, une telle solution n'est pas transposable au sein de modules MAER en technologie MMIC.

Une étape importante a été franchie avec l'industrialisation de circuits intégrés hyperfréquences sur arséniure de gallium (MMIC ou "Monolythic Microwave Integrated Circuits"). Cette technologie permet de réaliser à très faible masse et encombrement, et à un coût assez réduit en grande série, des circuits hyperfréquences divers ; dont notamment des déphaseurs et des atténuateurs commandables.

Le document EP-A-0 194 244 décrit un système de test et de mesures pour un système radar, qui permet de détecter la phase et l'amplitude soit dans la voie de réception, soit dans la voie d'émission, afin de pouvoir fournir des signaux de commande aux déphaseurs et aux atténuateurs commandables et ainsi d'effectuer les corrections nécessaires à la phase et l'amplitude de différents modules MAER pour les rendre conformes à des valeurs consignées (loi d'illumination) ou avec un moyen de phase ou d'amplitude défini par le système de test et de mesures.

L'inconvénient majeur des déphaseurs MMIC est lié à des pertes importantes (plus de 5 dB pour un déphaseur 0-360° à commande analogique ou à 4/5 bits digitaux). Cependant cet aspect devient secondaire lorsque l'on associe ces déphaseurs avec des amplificateurs :

- des amplificateurs HPA (High Power Amplifiers) situés après les déphaseurs en émission. Les pertes interviennent à bas niveau et ne jouent pas sur la limitation en puissance de sortie des amplificateurs : il faut seulement ajouter un peu plus de gain sur les amplificateurs ;

- des amplificateurs LNA (Low Noise Amplifiers) situés avant les déphaseurs en réception. A condition que leur gain soit suffisant (20 à 30 dB), les pertes des déphaseurs ne détériorent quasiment pas le facteur de bruit du récepteur.

Les modules de type MAER (Module Actif Emission Réception en anglais "TR module") sont en général fabriqués en connectant sur un même substrat (alumine) des "puces" en arséniure de gallium qui correspondent à chacune des fonctions élémentaires. Ces puces sont elles-même fabriquées en série en "fonderie" par des techniques de dopage (diffusion ou implantation ionique), masquage, oxydation ... inspirées des circuits intégrés logiques au silicium : ces derniers ont prouvé leur capacité à réduire les coûts de façon vertigineuse, sans altérer la fiabilité.

En assemblant plusieurs centaines ou milliers de tels "MMIC-TR modules" dans une antenne radar dite "active" (car elle comprend des amplificateurs qui sont des dispositifs actifs), on parvient ainsi à concilier les exigences du balayage électronique et celle du coût, de la masse et de l'encombrement, critiques pour les radars aéroportés, et encore plus pour les radars spatiaux.

Le dernier paramètre critique de telles antennes actives pour radar est leur consommation en énergie continue (D.C. = "direct current" en anglais)

Le rendement des amplificateurs HPA en puissance ajoutée :

$$\eta\, a = \frac{Pout - Pin}{PDC}$$

est nettement inférieur en technologie MMIC (15 à 20%) à celui des tubes amplificateurs de puissance (TOP = "tubes à ondes progressives") qui varie de 30 à 60% suivant les bandes hyperfréquences.

Ce rendement est particulièrement mauvais si l'on utilise les amplificateurs HPA en classe A (zone linéaire) en faisant varier la puissance d'entrée, donc de sortie : la consommation est déterminée par les tensions et courants de polarisation, ajustés sur la Pout maximale à sortir. On consomme autant quand on réduit Pin, donc Pout.

Une alternative consiste à faire réduire les tensions de polarisation lorsqu'on veut une Pout plus faible. La consommation diminue ainsi, mais nettement moins (en pourcentage ou dB) que la puissance de sortie. Le rendement η a baissé donc significativement.

Or si l'on veut former des diagrammes d'antenne performants, on doit :

- au minimum avoir une Pout différente suivant le module MAER, de façon à réaliser la pondération nécessaire de l'illumination de l'antenne (en anglais "illumination taper")
- dans certains cas, où la mission nécessite un lobe à largeur modulable, on doit aussi faire varier dans le temps la loi d'illumination en amplitude, donc la Pout des amplificateurs HPA.

Ainsi les antennes actives radar butent jusqu'ici sur le dilemme suivant : Obtenir un diagramme d'antenne à bas lobes secondaires, et si possible modulable, ne peut se faire qu'en détériorant le rendement des amplificateurs HPA répartis.

L'augmentation induite de la consommation a limité jusqu' ici la généralisation des antennes actives pour les radars aéroportés, et encore plus pour les radars spatiaux où la puissance disponible est très contingentée.

Pour sortir de ce dilemme "performances/consommation" l'invention a pour objet un procédé de formation du diagramme de l'antenne radar, particulièrement bien adapté aux antennes "actives" (à modules répartis incluant des amplificateurs émission et réception).

L'invention propose, en effet, un procédé de formation du diagramme d'une antenne radar optimisée pour les antennes "actives" à amplificateurs répartis sur l'antenne juste derrière les éléments rayonnants qui permet d'obtenir :

- une dissociation des lois d'illumination, donc des diagrammes, en émission et en réception ;
- une illumination équi-amplitude en émission pour maximiser le rendement des amplificateurs émission tous identiques, et minimiser leur consommation en énergie continue et leur dissipation ; points critiques des antennes actives (fonctionnement en classe B ou AB) ;
- une optimisation de la loi d'illumination en réception par un réglage du gain de la voie réception (atténuateur réglable ou dernier étage de l'amplificateur LNA à gain variable) ;
- une loi de phase identique en émission ou en réception, permettant l'utilisation de déphaseurs réciproques avec un rythme de commande modéré ;
- une synthèse de diagrammes de largeur variable par l'application d'une loi de phase adaptée, sans changer ni la puissance des amplificateurs émission, ni le gain de la voie réception ;
- un contrôle du gain de la voie réception pendant la mission, afin de former des diagrammes élargis à flancs plus raides, et d'améliorer le pouvoir discriminateur des radars.

Ainsi sur la voie réception des modules de type MAER, on contrôle le gain de façon à former un diagramme réception "adapté au diagramme émission" c'est-à-dire présentant un creux là où le diagramme émission présente des lobes secondaires gênants ; en effet :

- les performances d'un radar dépendent du produit Ge x Gr (gain émission x gain réception), dans une direction donnée caractérisée par ses angles $(\theta, \varphi)$ en coordonnées sphériques.
- les antennes passives réciproques ont le même diagramme en émission et en réception : Ge $(\theta, \varphi)$ = Gr $(\theta, \varphi)$
- l'antenne active selon l'invention ayant des diagrammes différents présente les mêmes performances qu'une antenne réciproque de diagramme : Ger $(\theta, \varphi) = \sqrt{\text{Ge}(\theta, \varphi) \times \text{Gr}(\theta, \varphi)}$

On appelle Ger le "diagramme équivalent émission-réception".

On le compare aux diagrammes obtenus par les méthodes habituelles où Ge est égal à Gr, et on obtient des performances supérieures.

L'invention se rapporte donc à un procédé de synthèses de diagrammes à bas niveau de lobes secondaires et à largeur variable en faisant varier le gain des MAER uniquement en réception, et en travaillant en émission à niveau constant, sur l'antenne et dans le temps.

En adaptant le diagramme réception au diagramme émission, on obtient des performances émission/réception très bonnes, et l'invention présente l'avantage fondamental de conserver un rendement acceptable aux amplificateurs émission répartis ; la consommation devient nettement plus faible tant pour les radars aéroportés que pour les radars spatiaux.

L'avantage fondamental de l'invention est que le réglage du gain des modules MAER, intervenant uniquement en réception, ne grève en rien la consommation de l'antenne. La puissance dissipée en plus sur la voie réception est négligeable devant celle dissipée par les amplificateurs HPA ; car le niveau du signal reçu, en écho des pulses émissions, est au moins 100 dB en dessous du signal émis.

Avec des modules actifs tous identiques (par exemple en technologie MMIC), on abaisse le coût par l'effet de série parce que l'on peut les dimensionner pour un niveau de puissance inférieur au niveau maximal que nécessiteraient des amplificateurs à gain différent ou variable ; en faisant fonctionner tous les amplificateurs HPA à même puissance de sortie, on optimise leur rendement et on minimise donc la consommation, point critique des antennes actives.

On peut faire varier la largeur du faisceau en commandant uniquement les déphaseurs, de la même façon en émission et en réception (ce qui limite le rythme des reconfigurations).

Ceci présente donc l'avantage supplémentaire de limiter le nombre de commandes.

Avantageusement, on peut réaliser une antenne présentant une répartition non uniforme des modules actifs dans une de ses dimensions, ce qui permet de diminuer de beaucoup leur nombre. Dans le cas où le balayage électronique ne s'effectue que dans un plan, on applique le procédé de l'invention dans ce seul plan, la pondération d'amplitude est alors identique en émission et en réception dans l'autre plan, générée par la répartition spatiale des modules actifs. Au total on a une antenne active dont les amplificateurs émission fonctionnent tous au même niveau, dont la loi d'illumination et le diagramme sont "séparables" dans chacun des deux plans principaux de l'antenne (azimut/élévation).

Les caractéristiques et avantages de l'invention ressortiront d'ailleurs de la description qui va suivre, à titre d'exemple non limitatif, en référence aux figures annexées sur lesquelles :

- la figure 1 illustre schématiquement un circuit MAER de l'art connu.
- les figures 2 et 3 illustrent un circuit MAER modifié selon l'invention ;
- la figure 4 illustre une représentation en coordonnées sphériques ;

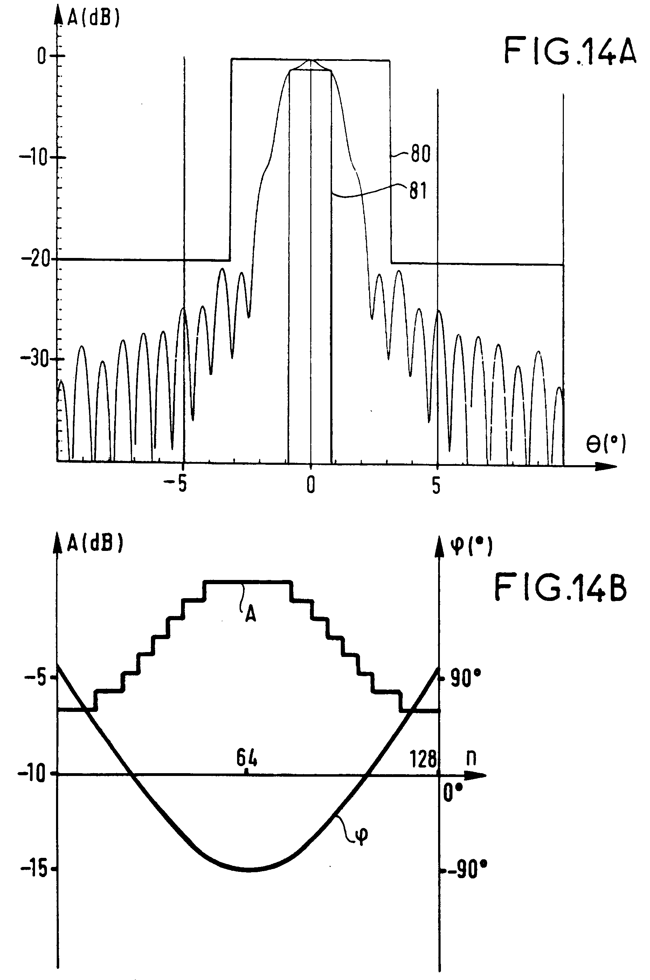

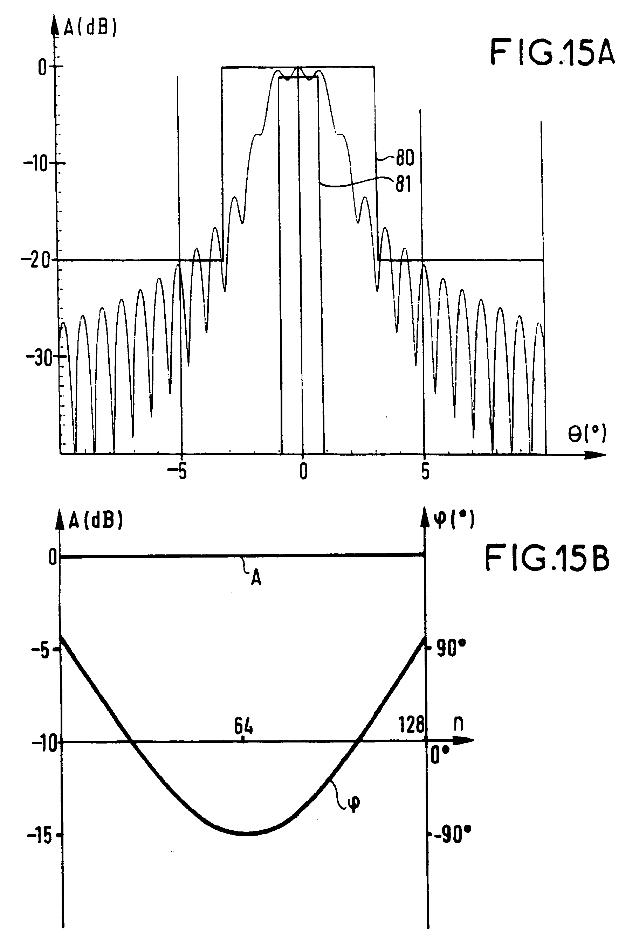

- les figures 5 à 22 représentent des diagrammes émission ou/et réception (dans leur partie A) mettant en évidence le fonctionnement du procédé de l'invention, ainsi que des courbes d'excitation des sources correspondantes (dans leur partie B) ;
- les figures 23 et 24 représentent un exemple d'antenne active en guides à fentes n'utilisant le principe de l'invention que dans un plan ;
- les figures 25 à 28 représentent des diagrammes de rayonnement émission ou/et réception (dans leur partie A), et des courbes d'excitation des sources (dans leur partie B).

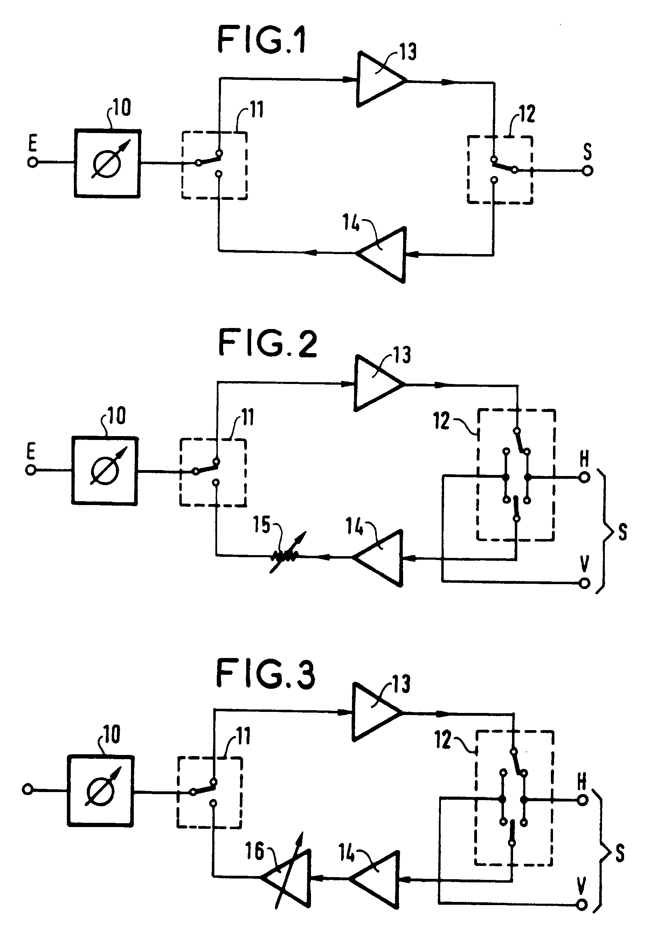

La structure des modules actifs émission-réception (MAER) est reprise de la structure classique d'un module MAER, représentée figure 1, qui comprend, entre une entrée émission E reliée à l'élément actif du radar et une sortie émission S reliée à l'élément rayonnant de l'antenne, un déphaseur numérique 10 et disposés en parallèle, tête-bêche entre un premier et un second commutateur 11, 12, un amplificateur d'émission 13 de type HPA, et un amplificateur réception 14 de type LNA. On ajoute à cette structure un contrôle de gain sur la voie réception. Celui-ci peut être réalisé de deux façons différentes :

- soit en ajoutant un atténuateur variable 15 derrière l'amplificateur LNA comme représenté à la figure 2 ;
- soit en contrôlant le gain du dernier étage de l'amplificateur LNA grâce à un "transistor effet de champ bi-grille" 16 (Field Effect Transistor) dont une grille sert classiquement de porte d'entrée et l'autre grille module le gain lorsqu'on fait varier sa tension de polarisation comme représenté à la figure 3.

Les amplificateurs HPA fonctionnent tous et toujours à la puissance de sortie. On peut donc maximiser celle-ci et optimiser le rendement en les faisant travailler en "zone de compression" ou "à saturation". On a ainsi des amplificateurs "classe B" ou "classe AB", dont la consommation continue et la dissipation sont nettement plus faibles (à Pout fixée) que les amplificateurs utilisés en zone linéaire (classe A) : cette dernière méthode serait indispensable si l'on voulait faire varier la puissance-émission.

Le commutateur de sortie 12 est un commutateur double entrée-double sortie (DPDT) qui assure à la fois la commutation émission-réception et un double accès aux éléments rayonnants (deux polarisations : horizontale H et verticale V). Il est bien adapté à une réalisation intégrée (technologie MMIC) assurant des dimensions et une masse très réduites.

Mais dans l'état de l'art connu, une telle réalisation pose des problèmes technologiques dans le cas d'amplificateurs HPA de très forte puissance. Dans ce cas on adopte une solution, non représentée sur les figures, qui comprend un circulateur suivi d'un commutateur de puissance une entrée-deux sorties (SPDT). Il faut alors protéger l'amplificateur LNA par un limiteur.

Bien que le procédé de l'invention s'applique pour une synthèse bi-dimensionnelle où les amplitudes Amn et les phases $\varphi$ mn de tous éléments rayonnants sont indépendantes, on présente les résultats obtenus dans un cas simplifié, pour une antenne rectangulaire à illumination séparable.

Cette technique est en effet appliquée dans la plupart des radars, notamment les radars aéroportés ou spatiaux fonctionnant suivant le mode SAR (Synthetic Aperture Radar) :

- on synthétise indépendamment le diagramme dans le plan principal d'élévation (plan vertical passant par la normale à l'antenne) et dans le plan principal d'azimut (plan horizontal passant par la normale à l'antenne)
- le diagramme élévation $G^{\acute{e}l}$ (v), avec

$$v = \frac{H}{\lambda} \sin El,$$

El étant l'angle depuis la normale dans le plan d'élévation, est relié à la loi d'illumination $E^{\acute{e}l}$ (y) sur l'axe vertical de l'antenne de hauteur H, fonctionnant à une fréquence où la longueur d'onde dans le vide vaut $\lambda$ avec :

. $G^{\acute{e}l}$ (v) = $| F^{\acute{e}l}$ (v) $|^2$
. $F^{\acute{e}l}$ (v) transformée de Fourier complexe de $E^{\acute{e}l}$ (y), le module de El caractérisant l'amplitude de l'excitation de la source située à l'ordonnée y et l'argument de El la phase de cette excitation.

- de même le diagramme azimut $G^{az}$ (u), avec

$$u = \frac{L}{\lambda} \sin Az,$$

Az étant l'angle depuis la normale dans le plan d'azimut, est relié à la loi d'illumination $E^{az}$ (x) sur l'axe horizontal de l'antenne de longueur L :

. $G^{az}$ (u) = $| F^{az}$ (u) $|^2$
. $F^{az}$ (u) transformée de Fourier complexe de $E^{az}$ (x), représentant en amplitude et phase l'excitation de la source d'abscisse x.

Toutes les amplitudes sont normalisées à 1 (ou 0 dB) au maximum et les phases ne jouent qu'à une constante près.

L'excitation de la source (ou élément rayonnant) d'abscisse x et d'ordonnée y est alors $E^{az}$ (x) x $E^{\acute{e}l}$ (y), et le diagramme de l'antenne dans la direction $\theta$, $\varphi$ vaut alors :

$$G (\theta, \varphi) = | F (\theta, \varphi) |^2$$

avec

$$F(\theta, \varphi) = F^{az}(u) \times F^{él}(v) \qquad u = \frac{L}{\lambda} \sin \theta . \cos \varphi$$

$$G(\theta, \varphi) = G^{az}(u) \times G^{az}(v) \qquad v = \frac{L}{\lambda} \sin \theta . \sin \varphi$$

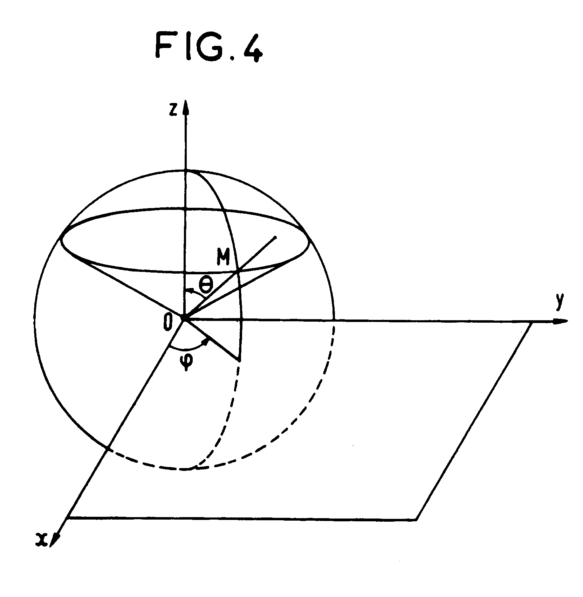

$\theta$ et $\varphi$ étant les angles d'Euler habituels en coordonnées sphériques, $\theta$ étant compté par rapport à la normale 0z à l'antenne et $\varphi$ par rapport à l'axe 0x horizontal, comme représenté sur la figure 4.

Ainsi, on se ramène dans chaque plan principal x0z (azimut) et y0z (élévation) à une synthèse de diagramme à une dimension générée par un alignement de sources ("réseau linéaire").

Pour une antenne radar fonctionnant en émission, puis en réception le diagramme d'antenne intervient deux fois :

- à l'émission, il concentre l'énergie dans la direction voulue, et permet, dans toutes les autres directions, de ne pas dépasser le niveau fixé pour les lobes secondaires (SLL - side lobe level = - 20 dB par exemple).
- à la réception un signal venant d'une direction différente de la direction de visée, est à nouveau pondéré par le diagramme d'antenne. Globalement le pouvoir descriminateur du radar dépend du produit Ge $(\theta, \varphi)$ x Gr $(\theta, \varphi)$ = diagramme émission x diagramme réception . En dB, les effets des deux diagrammes se somment ; si SLL = -20 dB en émission et - 20 dB en réception, les directions différentes de celle de visée sont atténuées de 40 dB.

Mais pour pouvoir comparer des diagrammes Ge et Gr différents, à un diagramme classique Ge égal à Gr (les antennes classiques sans amplificateurs sont réciproques et les diagrammes émission et réception sont identiques), on trace le "diagramme équivalent émission réception" $\sqrt{\text{Ger}(\theta, \varphi)} = \text{Ge}(\theta, \varphi) . \text{Gr}(\theta, \varphi)$ c'est-à-dire le diagramme ramené à un seul trajet (émission ou réception) qui provoque le même bilan de liaison du radar (le même produit Ge.Gr).

On considère alors comme exemple la synthèse d'un lobe fin avec 128 sources, la distance entre sources étant de 0,57 $\lambda$, chaque source élémentaire étant omnidirectionnelle.

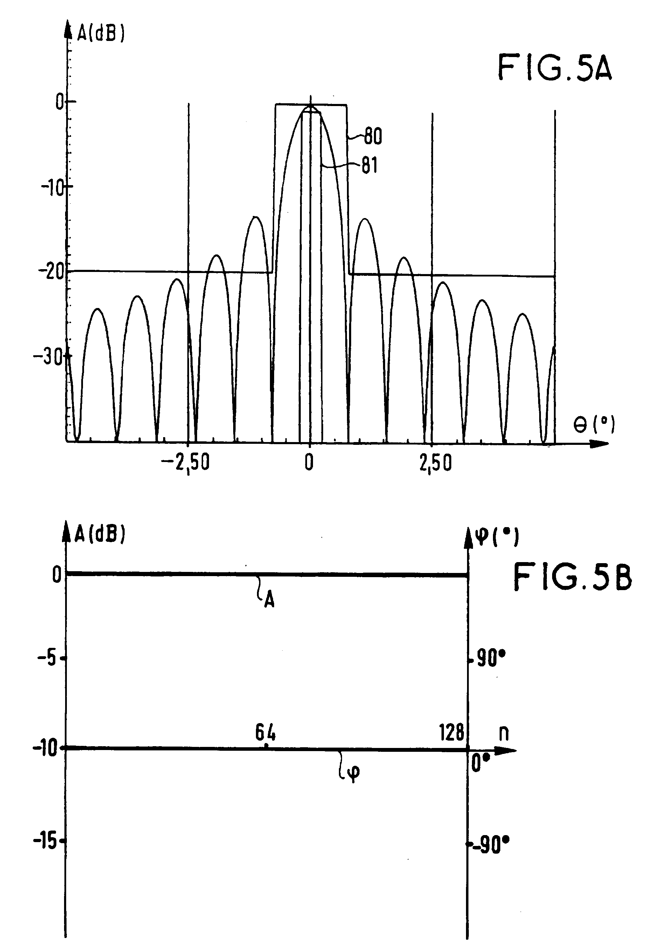

La figure 5A présente le diagramme émission, obtenu avec une illumination uniforme représentée en figure 5B (avec 128 lignes de patches), c'est-à-dire équi-amplitude (les amplificateurs HPA fonctionnent tous à même niveau) et équiphase (pour avoir un lobe fin).

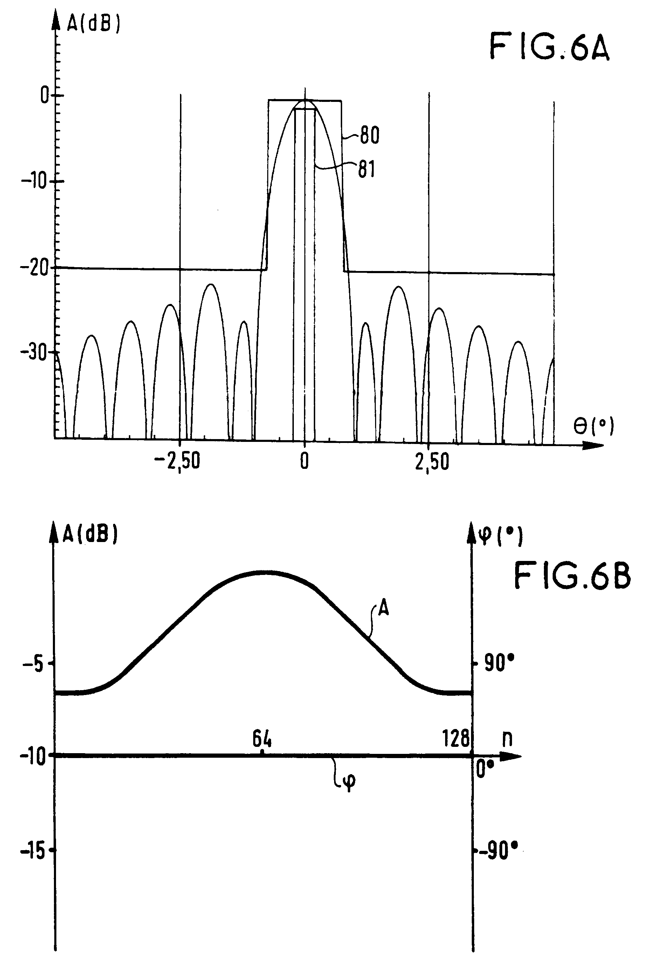

La figure 6A présente le diagramme réception : l'illumination représentée en figure 6B est toujours équiphase ; une pondération d'amplitude adaptée permet de faire descendre les premiers lobes secondaires par rapport aux suivants.

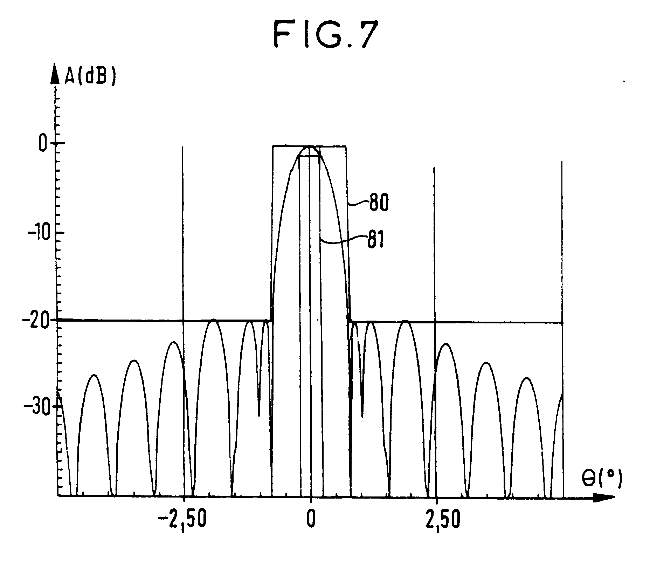

La figure 7 présente le "diagramme équivalent émission-réception", dont les performances sont excellentes :

. le niveau des lobes secondaires est voisin de -20dB, ce qui était l'objectif dans ce cas précis.

. la base du lobe principal est plus étroite que pour les diagrammes obtenus par la synthèse sur un seul trajet. Ceci est une qualité fondamentale, notamment pour les diagrammes d'antennes de type SAR qui doivent limiter au maximum les ambiguités, c'est-à-dire atténuer le plus possible des échos proches, en élévation comme en azimut.

. les performances en Directivité sont caractérisées par le "rendement d'illumination" $\eta i$, qui représente la perte de Directivité due à la loi d'amplitude et de phase, par rapport à une loi uniforme (cette dernière donne une Directivité $\frac{2L}{\lambda}$ pour un alignement de longueur L).

La perte sur le diagramme équivalent émission-réception vaut

$$\eta i = \frac{\eta i^2 + \eta i^r}{2}$$

(en dB), $\eta i^e$ et $\eta i^r$ étant les rendements d'illumination des lois émission et réception.

Le rendement $\eta i$ trouvé (-0,16 dB) est aussi bon que celui des meilleures lois (dits "de Taylor") qui assurent le même SLL $\leq$ -20 dB sur un seul trajet.

Les courbes 80 et 81 représentées sur les parties A des figures sont respectivement un gabarit extérieur, et un gabarit intérieur correspondants qui sont imposés.

Il y a une faible détérioration malgré la quantification du gain en réception :

En effet pour des raisons pratiques, on préfère simplifier le réglage du gain du module MAER en réception, et donc le contrôle de la loi d'amplitude, en le quantifiant en un nombre limité de niveaux.

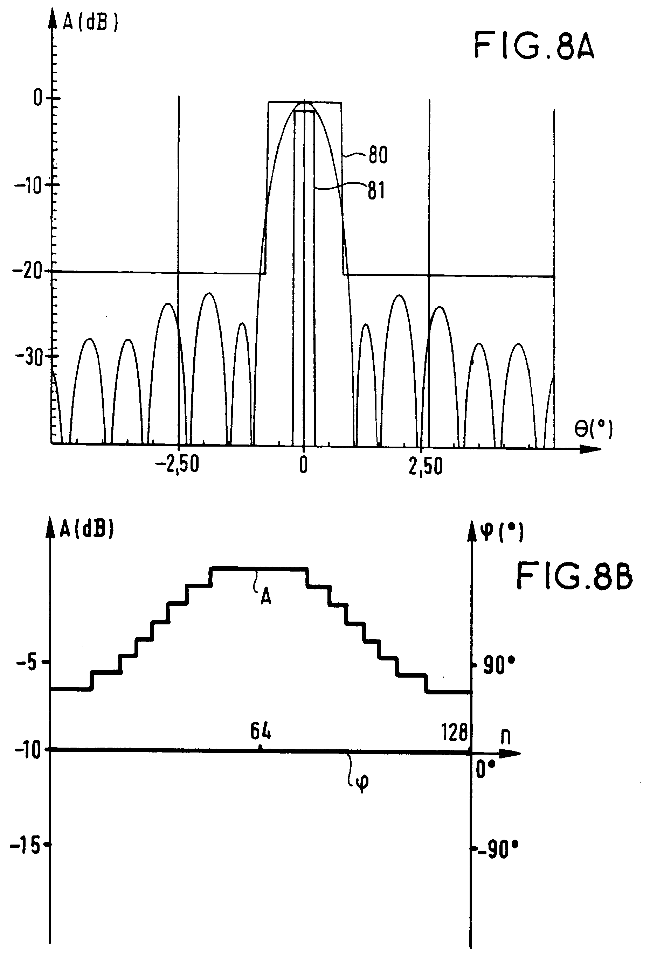

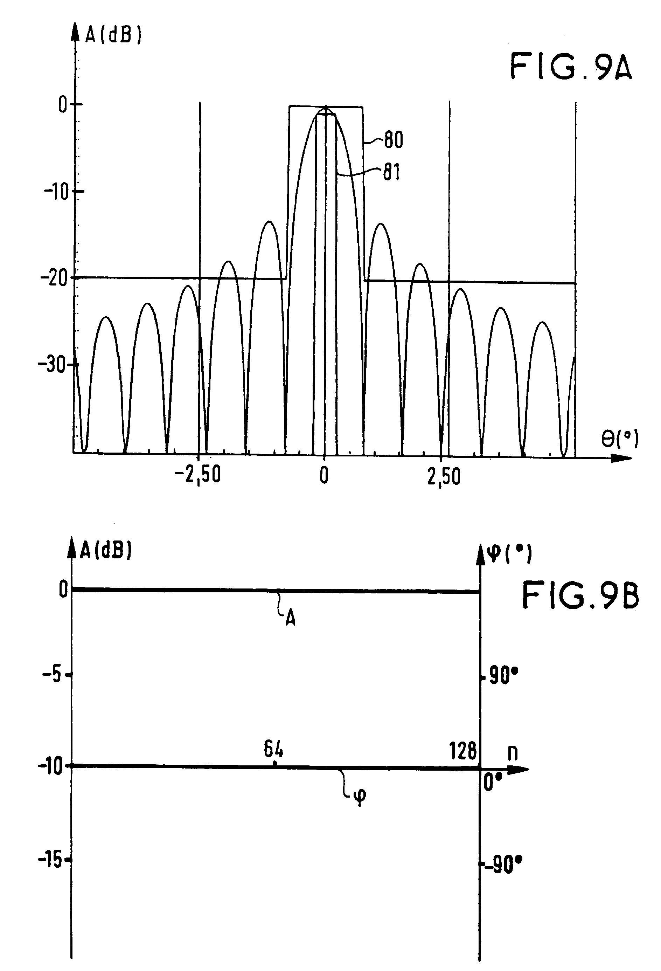

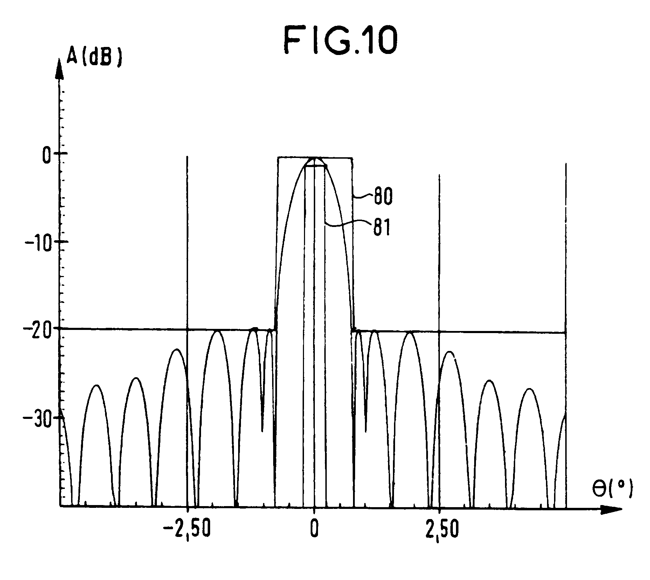

Les figures 8A, 9A et 10 représentent respectivement des diagrammes réception, émission et émission-réception. Elles montrent qu'un pas de quantification adapté, huit niveaux (donc trois bits) suffit pour avoir une loi d'illumination en réception voisine du cas "contrôle continu" (figure 6), et un diagramme de qualité similaire. Avec 128 sources omnidirectionelles, distantes de 0,57 $\lambda$, on obtient un rendement d'illumination global toujours aussi bon (-0,16 dB).

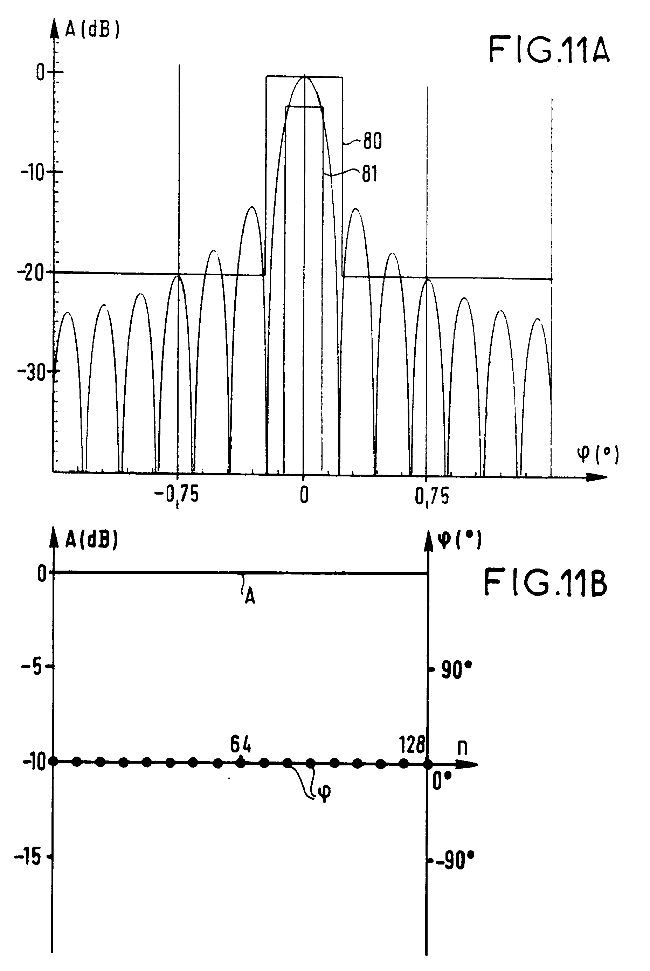

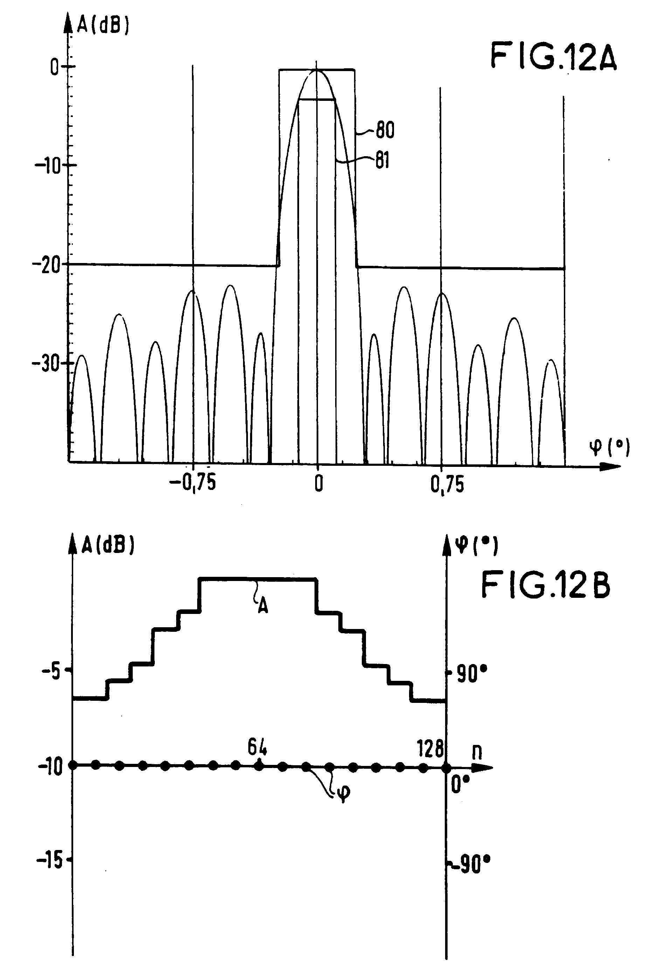

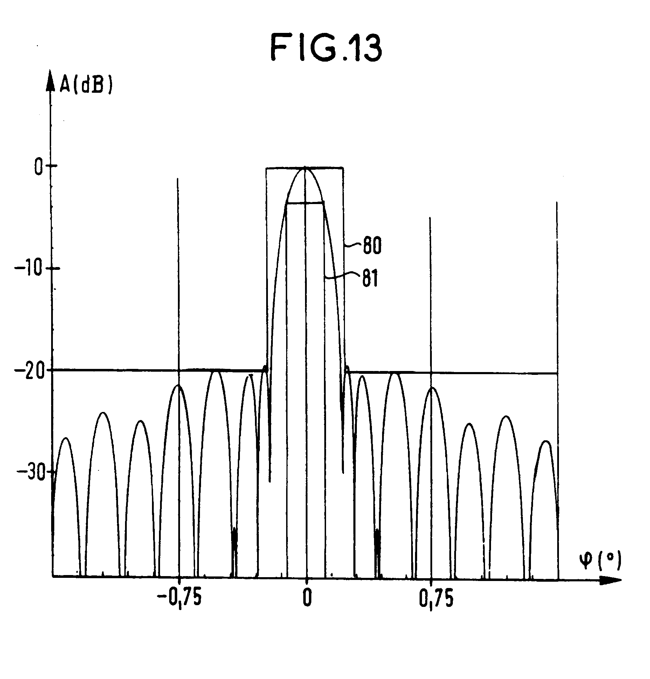

On peut effectuer également la synthèse d'un lobe fin avec 17 contrôles en amplitude seulement. Les figures 11A, 12A et 13, qui représentent respectivement des diagrammes émission, réception, et émission/réception, montrent que même si l'on diminue beaucoup le nombre de points d'alimentation de l'antenne (donc de contrôles en amplitude) et si l'on maintient une quantification sur huit niveaux, on obtient par le procédé décrit précédemment, un diagramme équivalent émission-réception de qualité similaire. Il s'agit dans ce cas d'une antenne active pour SAR spatial de longueur 8,16 mètres, décomposée en 17 sous-panneaux de 48 centimètres, qui sont seuls contrôlés en amplitude, de façon à utiliser des répartiteurs identiques à l'intérieur de tous les sous-panneaux . On obtient un rendement d'illumination global à peine moins bon (-0,18 dB).

Un tel procédé peut se généraliser à un nombre quelconque de modules actifs, au-delà d'un nombre minimal voisin d'une dizaine sur la dimension de l'antenne considérée.

On peut également réaliser la synthèse d'un lobe élargi par les seuls déphaseurs en conservant la même loi équi-amplitude en émission (amplificateur HPA à même puissance de sortie) et la loi de pondération trouvée en réception (quantifiée selon figure 8). Par exemple on ajoute une loi de phase de type parabolique si la mission nécessite un lobe élargi (par exemple en mode SLAR ou "Side looking Airborne Radar", servant à imager le sol en générant des pixels de luminosité proportionnelle à l'intensité de l'écho reçu de chaque cellule de révolution, ou SAR) si l'on veut garder une fauchée au sol constante. Les diagrammes correspondant sont présentés sur les figurés 14, 15 et 16 : ce sont respectivement des diagrammes réception, émission, émission/réception. Avec 128 sources omnidirectionnelles distantes de 0,57 $\lambda$ on obtient un rendement d'illumination global de -4,83 dB.

Ce procédé limite le nombre de commandes à transmettre aux modules actifs à la seule reconfiguration des déphaseurs : celle-ci est de toute façon nécessaire pour le dépointage du faisceau, lié en général à son élargissement. La phase d'élargissement étant identique en émission et en réception, le rythme de commande des déphaseurs est modéré.

Les atténuateurs situés sur la voie réception des modules actifs (ou les amplificateurs LNA à gain variable) n'ont pas besoin d'être commandés. Ils sont préréglés à la valeur voulue, on ne risque pas ainsi d'ajouter de perturbation de phase.

Si l'on veut obtenir des diagrammes élargis mieux formés, on peut s'accorder un degré de liberté supplémentaire consistant à contrôler le gain des modules MAER en réception au cours du temps. Cela permet de mieux adapter la loi d'illumination réception en amplitude et en phase, à chaque largeur de lobe visée.

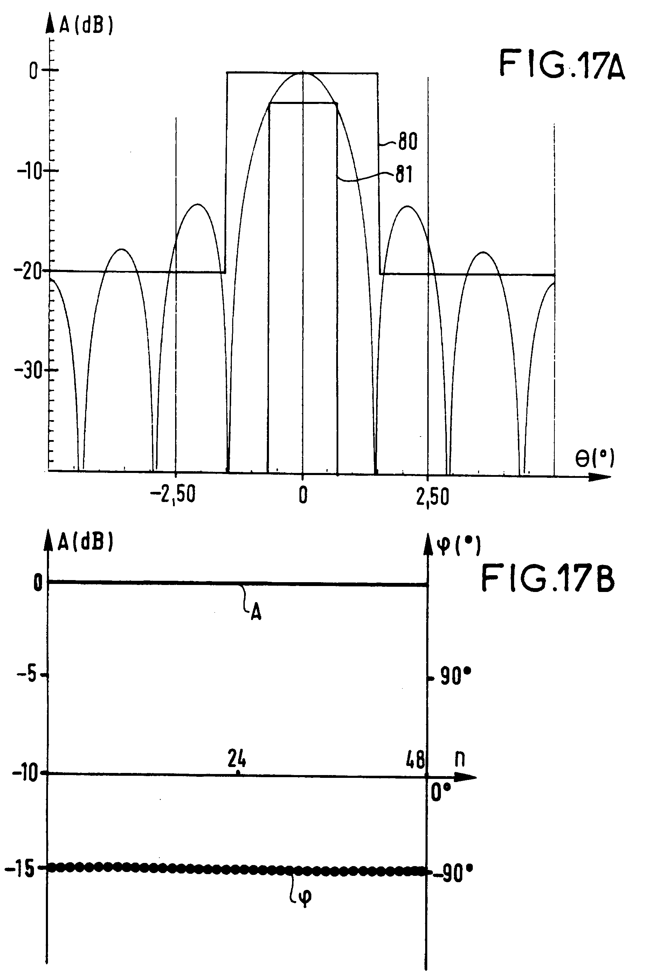

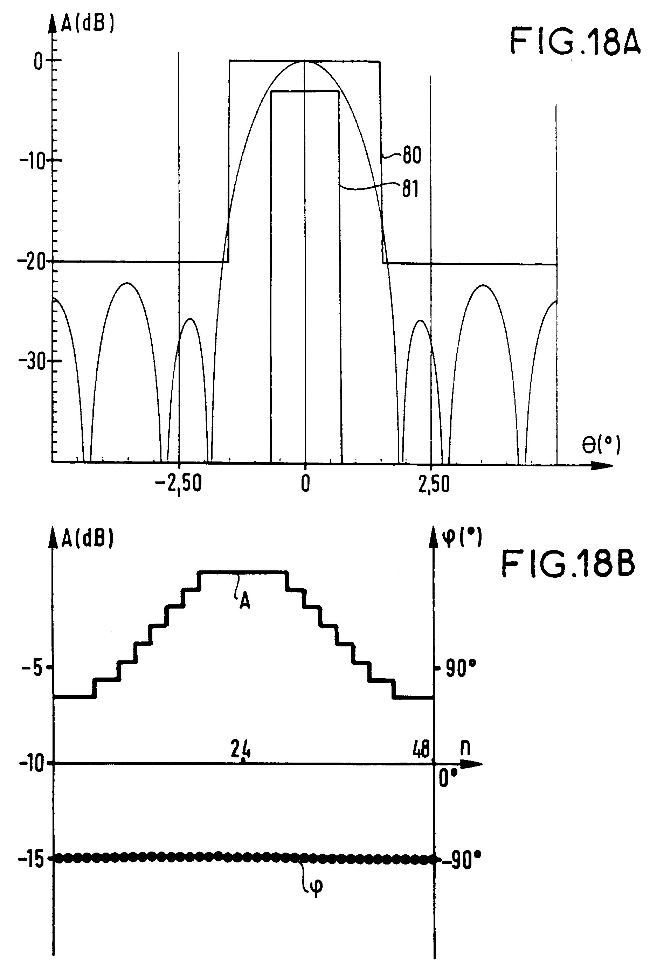

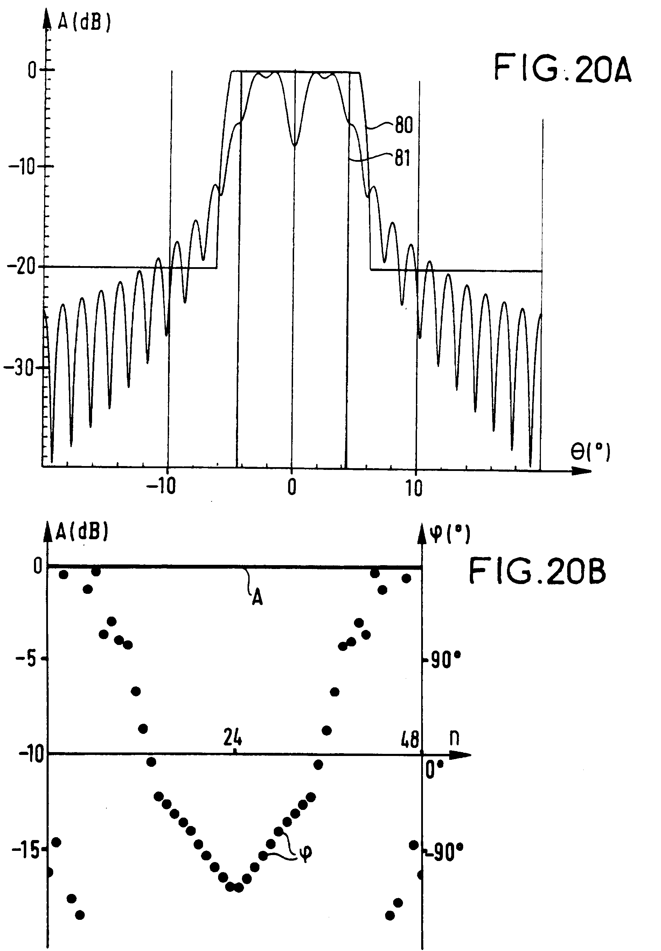

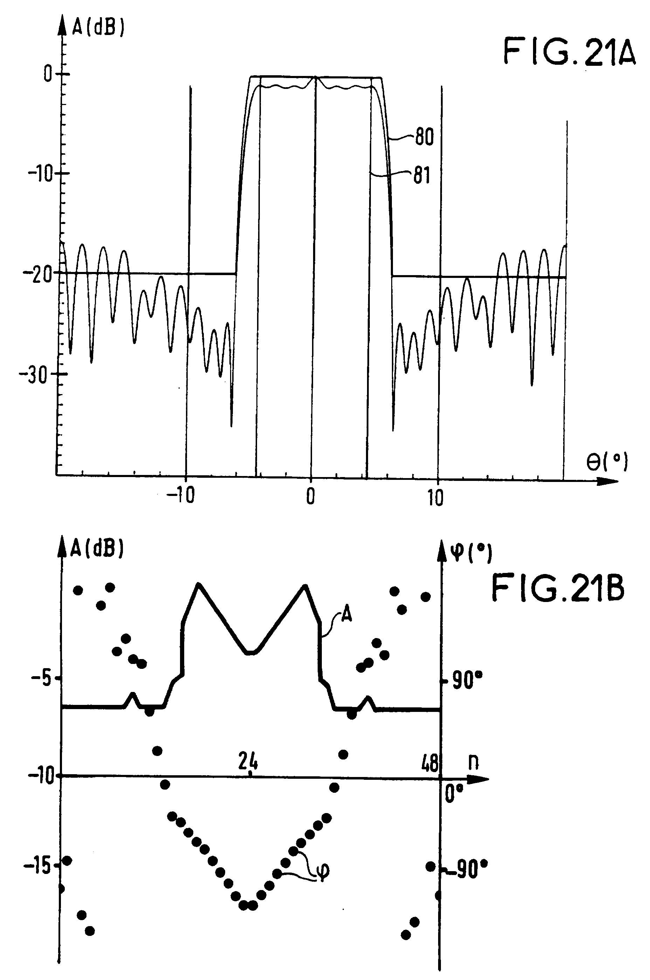

Ainsi les figures 17 à 19 et 20 à 22, qui représentent successivement des diagrammes émission, réception et émission/réception présentent deux lobes de largeur très différentes (1°4 et 8°8 à 3 dB du maximum) générés par le même réseau actif de 48 sources distantes de 0,822 $\lambda$ .

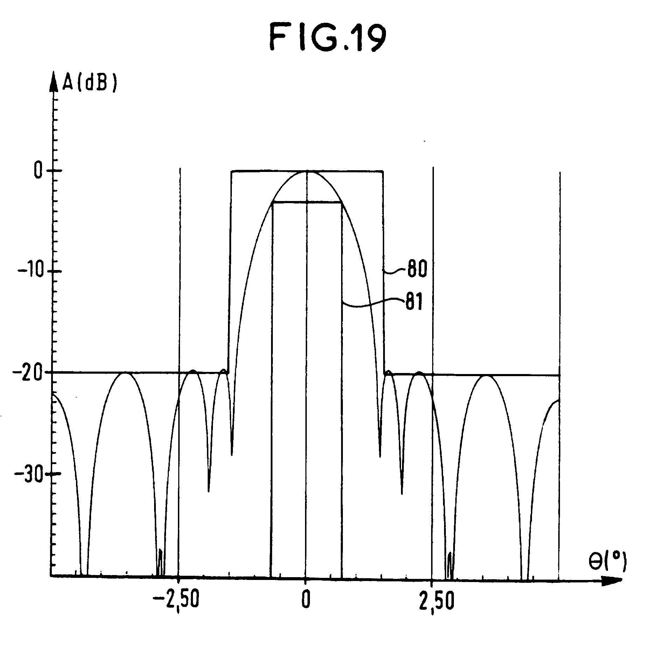

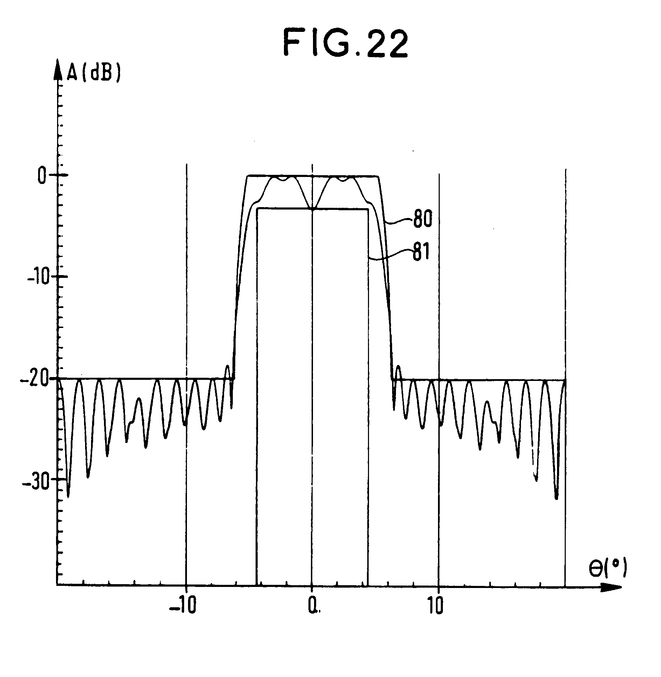

- les illuminations en émission sont toujours équi-amplitude pour faire fonctionner les amplificateurs HPA à niveau identique.
- par contre le changement de loi d'illumination en réception, en amplitude et en phase, permet de générer soit un lobe très fin de SLL $\leqq$ -20 dB (figure 19), soit un lobe large à flancs très raides et de SLL voisin (figure 22).

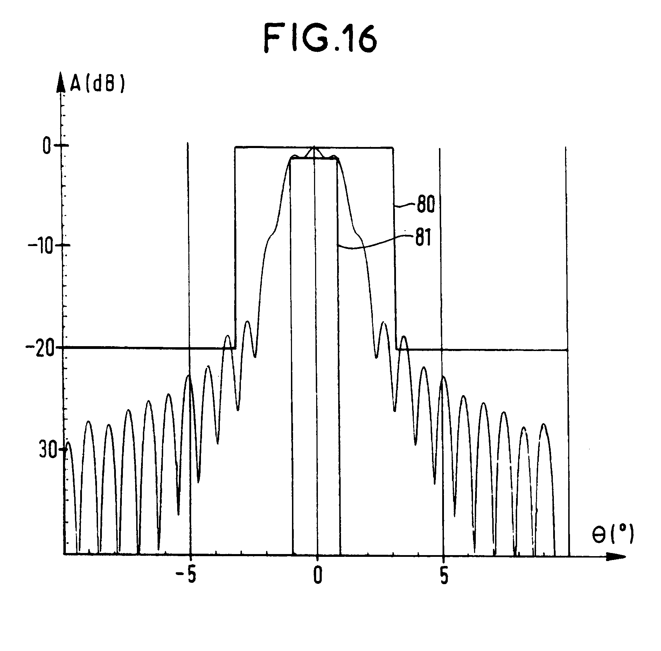

Grâce au degré de contrôle supplémentaire (amplitude en réception), le diagramme du lobe élargi a des flancs plus raides que ceux de la figure 16, le pouvoir discriminateur du radar est donc meilleur.

Le seul inconvénient de cette variante est qu'il faut faire varier au cours du temps le gain de la chaîne réception des modules MAER. Cela augmente le débit des commandes et oblige à prévoir des drivers supplémentaires dans les modules MAER.

Deux options sont possibles sur le contrôle de gain :

- ou bien on s'impose une dynamique maximale (6,5 dB pour l'exemple présenté) qui évite d'induire un changement de phase d'insertion de la voie réception du module MAER.
- ou bien, si une dynamique plus importante s'avère nécessaire pour mieux former le diagramme, on calibre les variations de phase induites, et l'on en tient compte dans la commande des déphaseurs. Ceci présente l'inconvénient d'avoir à les reconfigurer à un rythme élevé entre l'émission et la réception.

Certains radars n'ont besoin du balayage électronique que dans un plan, par exemple le plan d'élévation dans les modes SLAR (Side-looking airborne radar) ou SAR.

Dans le plan horizontal de l'antenne, on n'a pas besoin de nombreux contrôles d'amplitude et de phase.

Pour simplifier l'antenne, on répartit un petit nombre de modules actifs sur la longueur.

Dans ce cas, on ne dispose pas d'assez de contrôles d'amplitude et de phase pour appliquer le procédé précédent à la synthèse du diagramme en azimut. Mais l'espacement plus grand des modules MAER permet d'appliquer un principe différent :

- on réalise cette fois un diagramme azimut identique en émission et en réception ;
- on répartit les modules MAER de façon non régulière sur la longueur d'antenne, pour réaliser la pondération d'amplitude nécessaire avec des amplificateurs HPA fonctionnant tous à même puissance de sortie, afin d'optimiser leur rendement comme dans la version de base.

Un exemple de principe ci-dessus est présenté ci-après.

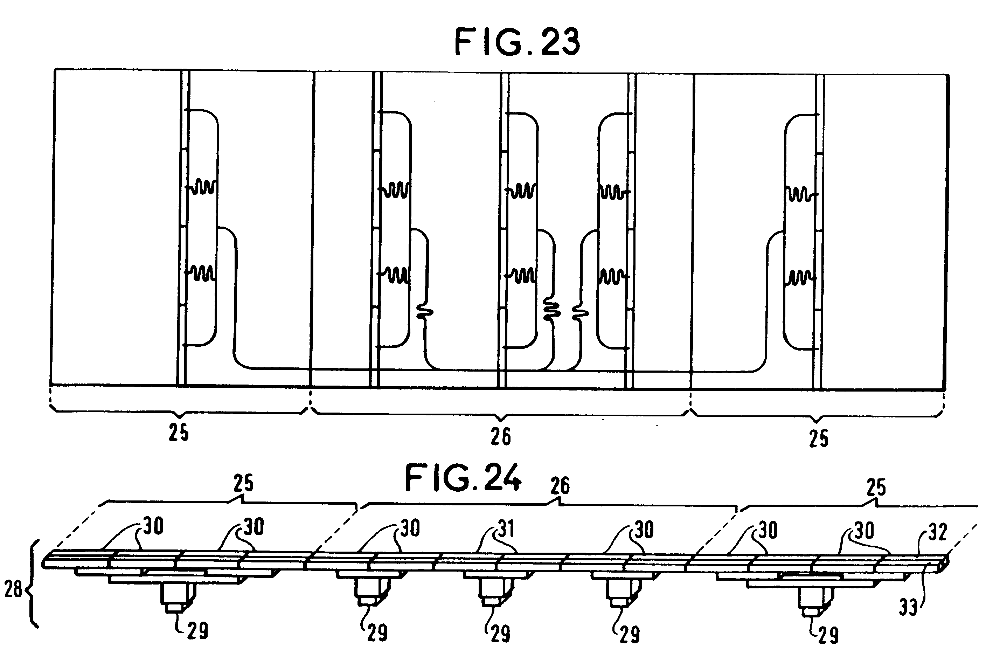

La figure 23 représente une grande antenne active (8m32 x 1m91) destinée à un radar spatial d'observation fonctionnant suivant le mode SAR. Pour pouvoir être repliée sous la coiffe du lanceur, l'antenne est décomposée en trois panneaux 25, 26 et 27. Elle comporte 88 lignes horizontales 28 identiques, comme représentée à la figure 24.

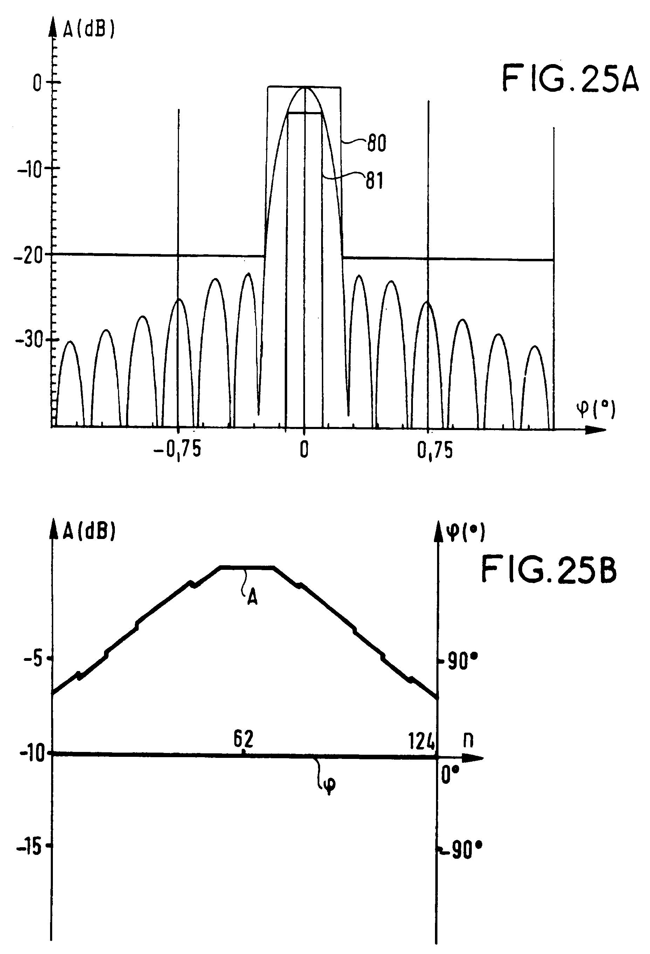

Sur chaque ligne horizontale 28 d'éléments rayonnants (ici des guides à fentes superposés 32 et 33, rayonnant les uns en polarisation horizontale, les autres en polarisation verticale) sont disposés cinq modules MAER 29. Leur répartition non uniforme (plus rapprochés au centre) alliée à un réglage des conductances des fentes rayonnantes pour obtenir une loi d'amplitude variant linéairement en dB d'un bout à l'autre, permet de réaliser un diagramme de bonne qualité (figure 25).

En même temps on n'a besoin que de deux types de guides rayonnants :

- des guides 30 de longueur 60,4 cm à loi d'illumination "en biseau" ;
- des guides 31 de longueur 53,7 cm à loi d'illumination uniforme.

Ceci simplifie grandement l'industrialisation de cette antenne. Pour le diagramme élévation, on applique par contre le procédé exposé précédemment.

Le balayage électronique étant important dans ce plan on a un contrôle de phase pour chaque sous-panneau (jeu de deux guides 32 et 33 rayonnants en polarisation H et V), c'est-à-dire à un pas voisin de 0,7 fois la longueur d'onde :

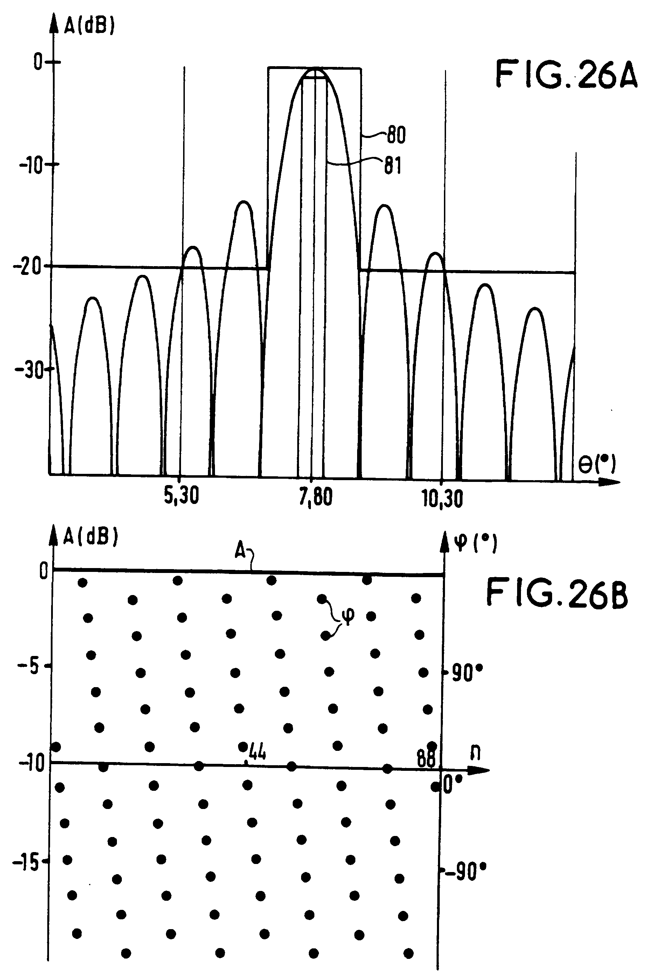

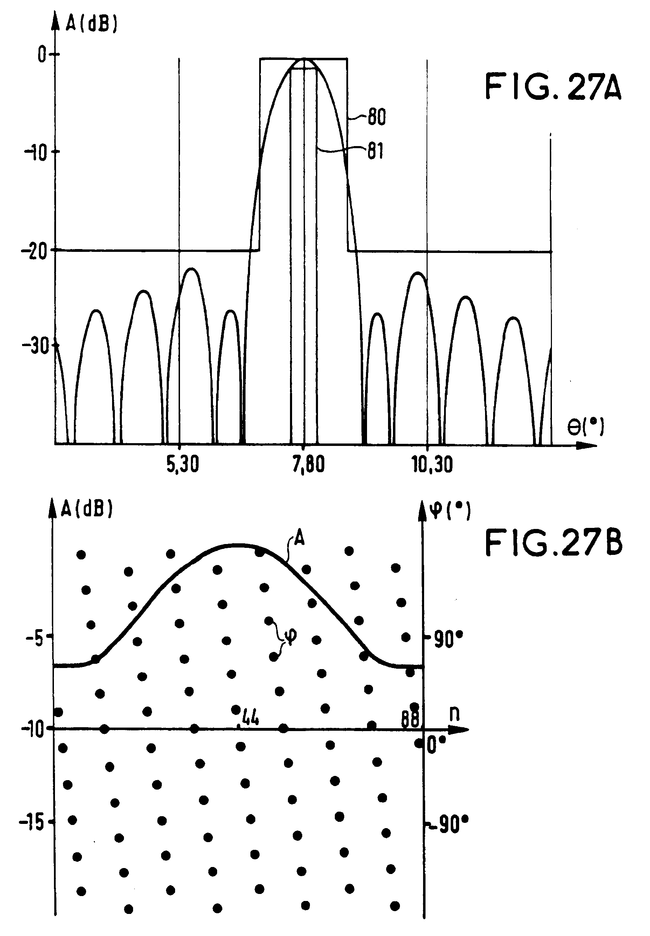

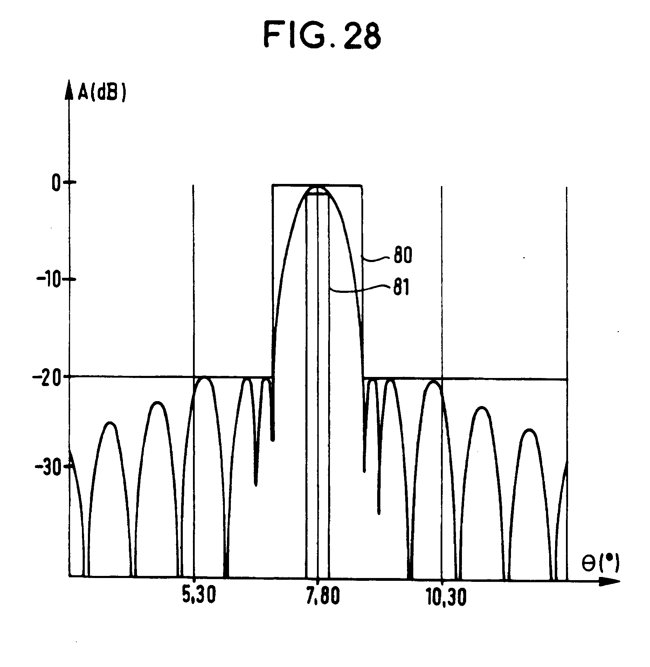

- on a donc 88 modules actifs sur la hauteur d'antenne répartis uniformément, la hauteur des guides rayonnants étant toujours la même.
- à l'émission, tous les amplificateurs HPA ayant la même puissance de sortie, on réalise une illumination uniforme comme représenté sur la figure 26,
- à la réception, on règle les atténuateurs situés derrière les amplificateurs LNA pour réaliser la pondération et on obtient le diagramme représenté sur la figure 27 ;
- le diagramme équivalent émission réception représenté sur la figure 28 présente les mêmes qualités déjà décrites.

Il est bien entendu que la présente invention n'a été décrite et représentée qu'à titre d'exemple préférentiel et que l'on pourra remplacer ses éléments constitutifs par des éléments équivalents sans, pour autant, sortir du cadre de l'invention.

**Revendications**

1. Procédé de formation de diagramme à bas niveau de lobes secondaires et à largeur variable d'une antenne à haut rendement pour radar à balayage électronique, caractérisé en ce que :

   - on dissocie les lois d'illumination, donc des diagrammes, en émission et en réception;
   - on réalise une illumination équi-amplitude en émission pour maximiser le rendement des amplificateurs émission (13) tous identiques, et minimiser leur consommation en énergie continue et leur dissipation et en ce que
   - l'on optimise la loi d'illumination en réception par un réglage du gain de la voie réception de façon à former un diagramme réception adapté au diagramme émission, c'est-à-dire présentant un creux là où le diagramme émission présente des lobes secondaires gênants.

2. Procédé selon la revendication 1, caractérisé en ce que la loi de phase est identique en émission ou en réception, permettant l'utilisation de déphaseurs réciproques avec un rythme de commande modéré.

3. Procédé selon l'une quelconque des revendications précédentes, caractérisé en ce que l'on effectue une synthèse de diagrammes de largeur variable par l'application d'un loi de phase adaptée, sans changer ni la puissance des amplificateurs émission, ni le gain de la voie réception.

4. Procédé selon l'une quelconque des revendications précédentes, caractérisé en ce que l'on contrôle le gain de la voie réception, afin de former des diagrammes élargis à flancs plus raides, et d'améliorer le pouvoir discriminateur des radars.

5. Antenne active à haut rendement et à bas niveau de lobes secondaires pour radar à balayage électronique à amplificateurs répartis sur l'antenne juste derrière les éléments rayonnants, comprenant des modules actifs émission-réception de type MAER comprenant des amplificateurs haute puissance de type HPA (13) situés après des déphaseurs en émission, et des amplificateurs bas bruit de type LNA (14) situés avant des déphaseurs en réception, caractérisé en ce qu'en émission, tous les amplificateurs sont identiques et réparties uniformément sur ladite antenne, et en ce qu'ils sortent une même puissance constante dans le temps et en ce qu'en réception le gain des amplificateurs (14) est contrôlé pour former un diagramme réception adapté au diagramme émission c'est-à-dire présentant un creux là ou le diagramme émission présente des lobes secondaires gênants.

6. Antenne selon la revendication 5, caractérisé en ce que les modules actifs sont tous identiques.

7. Antenne selon l'une quelconque des revendications 5 ou 6, caractérisé en ce que l'on fait varier la largeur du faisceau en commandant uniquement les déphaseurs de la même façon en émission et en réception.

8. Antenne selon l'une quelconque des revendications 5 à 7, caractérisé en ce que les modules actifs MAER sont répartis de manière non uniforme dans une dimension de l'antenne.

**Claims**

1. A method of forming the radiation pattern of variable width and having low side lobe levels of a high efficiency antenna for electronically-scanned radar, the method being characterized in that:

   its illumination laws, and thus its radiation patterns, are dissociated in transmission and in reception;
   equal amplitude illumination is provided in transmission in order to maximize the efficiency of the transmit amplifiers (13) which are all identical, thereby minimizing their DC energy consumption and their dissipation; and
   the illumination law in reception is optimized by adjusting the gain of the receive path so as to form a receive radiation pattern which is adapted to the transmit pattern, i.e. which has sensitivity lows where the transmit pattern has interfering side lobes.

2. A method according to claim 1, characterized in that the phase law is identical in transmission and in reception, thereby making it possible to use reciprocal phase shifters which are controlled at a moderate control rate.

3. A method according to either preceding claim, characterized in that variable width radiation patterns are synthesized by applying an appropriate phase law without changing either the power of the transmit amplifiers or the gain of the receive paths.

4. A method according to any preceding claim, characterized in that the gain of the receive path is controlled so as to form patterns that are widened with steep sides, thereby improving the discriminating power of the radar.

5. A high efficiency active antenna having low side lobe levels for an electronically-scanned radar, the antenna having amplifiers distributed thereover immediately behind its radiating elements, the antenna comprising active transmit-receive modules including high power amplifiers (13) situated after phase shifters in transmission, and low noise amplifiers (14) situated before phase shifters in reception, the antenna being characterized in that in transmission all of the amplifiers are identical and are uniformly distributed over said antenna, in that all of the amplifiers deliver the same power which remains constant over time, and in that in reception the gain of the amplifiers (14) is controlled so as to form a receive radiation pattern which is adapted to the transmit pattern, i.e. which has sensitivity lows where the transmit pattern has interfering side lobes.

6. An antenna according to claim 5, characterized in that all of the active modules are identical.

**7.** An antenna according to claim 5 or claim 6, characterized in that the beam width is varied solely by controlling the phase shifters in the same manner both in transmission and in reception.

**8.** An antenna according to any one of claims 5 to 7, characterized in that the active transmit-receive modules are distributed in a non-uniform manner in one of the dimensions of the antenna.

**Patentansprüche**

**1.** Verfahren zur Bildung eines Diagramms mit geringem Nebenkeulenniveau und variabler Größe einer Antenne mit hohem Wirkungsgrad für ein Radargerät mit elektronischer Strahlablenkung, dadurch gekennzeichnet,

-   dass die Beleuchtungsgesetze, d.h. die Diagramme in Sende- und Empfangsrichtung getrennt werden,
-   dass in Senderichtung eine Beleuchtung mit konstanter Amplitude erfolgt, um den Wirkungsgrad der dann identischen Sendeverstärker (13) zu optimieren und ihren Gleichstromverbrauch und ihre Wärmeverluste zu verringern,
-   und dass das Beleuchtungsgesetz in Empfangsrichtung durch eine Steuerung des Verstärkungsgrads des Empfangskanals derart optimiert wird, dass ein das Sendediagramm angepasstes Empfangsdiagramm gebildet wird, d.h. dass dort eine Lücke entsteht, wo das Sendediagramm störende Nebenkanten bildet.

**2.** Verfahren nach Anspruch 1, dadurch gekennzeichnet, dass das Phasengesetz in Sende- oder Empfangsrichtung identisch ist, so dass reziproke Phasenschieber mit einem mäßigen Steuerrythmus verwendet werden können.

**3.** Verfahren nach einem beliebigen der vorhergehenden Ansprüche, dadurch gekennzeichnet, dass eine Synthese von Strahlungsdiagrammen mit variabler Breite durch Anwendung eines geeigneten Phasengesetzes ohne Veränderung der Leistung der Sendeverstärker oder des Verstärkungsgrads des Empfangskanals erreicht wird.

**4.** Verfahren nach einem beliebigen der vorhergehenden Ansprüche, dadurch gekennzeichnet, dass der Verstärkungsgrad des Empfangskanals gesteuert wird, um breitere Diagramme mit steileren Flanken zu bilden und das Diskriminationsvermögen der Radargeräte zu verbessern.

**5.** Aktive Antenne mit hohem Wirkungsgrad und geringem Nebenkeulenniveau für ein Radargerät mit elektronischer Strahlablenkung und über die Antenne unmittelbar hinter den strahlenden Elementen verteilt angeordneten Verstärkern, wobei die Antenne aktive Sende-Empfangsmoduln vom Typ MAER mit Leistungsverstärkern vom Typ HPA (13), die hinter den Phasenschiebern in Senderichtung liegen, und mit rauscharmen Verstärkern (14) vom TYP LNA besitzt, die vor den Phasenschiebern in Empfangsrichtung liegen, dadurch gekennzeichnet, dass in Senderichtung alle Verstärker identisch sind und gleichmäßig über die Antenne verteilt sind und dass sie alle die gleiche zeitlich konstante Leistung liefern, während in Empfangsrichtung der Verstärkungsgrad der Verstärker (14) so gesteuert wird, dass sich ein an das Sendediagramm angepasstes Empfangsdiagramm ergibt, d.h. dass dort eine Lücke entsteht, wo das Sendediagramm störende Nebenkeulen bildet.

**6.** Antenne nach Anspruch 5, dadurch gekennzeichnet, dass die aktiven Moduln einander alle gleichen.

**7.** Antenne nach einem beliebigen der Ansprüche 5 oder 6, dadurch gekennzeichnet, dass die Breite des Strahls allein durch gleichartige Steuerung der Phasenschieber sowohl in Senderichtung wie in Empfangsrichtung variiert wird.

**8.** Antenne nach einem beliebigen der Ansprüche 5 bis 7, dadurch gekennzeichnet, dass die aktiven Moduln (MAER) in einer Richtung der Antenne ungleichmäßig verteilt sind.

# FIG.1

# FIG.2

# FIG.3

# FIG.4

FIG.5A

FIG.5B

FIG.6A

FIG.6B

# FIG.7

FIG.8A

FIG.8B

FIG.9A

FIG.9B

# FIG.10

FIG.11A

FIG.11B

FIG.12A

FIG.12B

# FIG.13

FIG.14A

A(dB)

80
81

Θ(°)

-5    0    5

FIG.14B

A(dB)    φ(°)

A

90°

64    128    n

0°

φ

-90°

23

FIG.15A

FIG.15B

# FIG.16

FIG.17A

FIG.17B

FIG.18A

FIG.18B

# FIG.19

FIG.20A

FIG.20B

FIG.21A

FIG.21B

# FIG.22

FIG.23

FIG.24

FIG.25A

FIG.25B

# FIG.26A

# FIG.26B

FIG. 27A

FIG.27B

## FIG.28